# EUROPEAN PATENT APPLICATION

(11) **EP 4 596 232 A1**
(43) Date of publication of application: **06.08.2025**
(21) Application number: 24382097.4
(22) Date of filing: 31.01.2024
(51) Int. Cl.: B32B 7/12, B32B 15/085, B32B 15/20, B32B 27/08, B32B 27/10, B32B 27/30, B32B 27/32, B32B 27/34, B32B 27/40, C08L 23/12, C08L 51/06, C09J 151/06

(54) **TIE LAYERS COMPRISING CRYSTALLINE BLOCK COMPOSITE COMPONENTS AND FUNCTIONALIZED POLYETHYLENE AND COATED SUBSTRATES INCORPORATING SAME**

(71) Applicant: Dow Global Technologies LLC, Midland, MI 48674 (US)
(72) Inventor: DONG, Yifan, Lake Jackson, 77566 (US); HILL, Martin, 43006 Tarragona (ES); MARKS, Scott B., Wilmington, 19803 (US); JIN, Lin, Lake Jackson, 77566 (US); LEE, Jong-Young, Lake Jackson, 77566 (US); Ye, Dan, Lake Jackson, 77566 (US); VERVOORT, Sylvie, 4542 NM Hoek (NL); MAKSIMOVIC, Ksenija, 43006 Tarragona (ES)
(74) Representative: Elzaburu S.L.P.

(57) **Abstract**

A coated substrate includes a polar layer, at least one polypropylene layer, and at least one tie layer that adheres the polypropylene layer to the polar layer, wherein the tie layer includes a crystalline block composite (CBC) component including an ethylene polymer (EP) comprising at least 90 mol % polymerized ethylene by weight of the ethylene polymer, an alpha-olefin-based crystalline polymer (CAOP), and a block copolymer including an ethylene polymer block comprising at least 90 mol % polymerized ethylene by weight of the ethylene polymer block and a crystalline alpha-olefin block (CAOB), functionalized polyethylene having a melt flow rate MFR (190 °C/ 2.16 kg) of 1.0 to 10.0 dg/min as determined according to ASTM D1238, wherein the functionalized polyethylene comprises polyethylene grafted with ethylenically unsubstituted dicarboxylic acid or derivative thereof, and a modifier comprising a polyolefin elastomer.

## Description

### TECHNICAL FIELD

The present disclosure generally relates to tie layers effective at higher temperatures and specifically relate to coated substrates that utilize these tie layers to maintain adhesion between a polypropylene layer and a polar layer at higher temperatures.

### BACKGROUND

Specialty coated substrates serve multiple applications and market segments across the food, specialty packaging, infrastructure, and transportation industries. These coated substrates may include tie layers to adhere dissimilar layers, for example, polyolefin layers and polar barrier layer such as EVOH or polyamide, within the coated substrate. The coated substrate can be aluminum foil, metalized films, or polar substrates further laminated with paperboard. The tie layers strongly adhere to the layers on each side of the tie layer, thus helping bind together those layers in the coated substrate.

However, conventional tie layers are often unable to withstand high temperatures (i.e., temperatures greater than 100 °C), which may result in poor adhesion and delamination of the coated substrate. Therefore, a need exists for improved tie layers that resist delamination at high temperatures.

### SUMMARY

The fast line speed during extrusion coating (i.e. line speed greater than or equal to 300 mpm) limits the polymer travel time in the air gap, which is the distance between extrusion die and the chill roll. The limited travel time in the air gap does not allow stress relaxation after extruding polymers from a narrow die. Failing to allow stress relaxation generates high residual stress, which eventually makes bonding to substrates very challenging, especially with polar substrates such as aluminum foil or metalized films. Therefore, there is a need for coated substrates with good adhesion even when with limited travel time in the air gap.

Embodiments of the present disclosure address these and other issues by utilizing a tie layer comprising a crystalline block composite (CBC) component and a functionalized polyethylene that delivers superior adhesion enhancement at higher temperatures to multilayer films. The crystalline block composite (CBC) component and a functionalized polyethylene will not only deliver enhanced solid handling during pellet transportation, but also provide improved heat resistance for high-temperature applications such as retort packaging or battery packaging. Some embodiments of the present disclosure may be suitable for high temperature applications up to 120 °C.

In one embodiment, a coated substrate includes a polar layer, at least one polypropylene layer, and at least one tie layer that adheres the polypropylene layer to the polar layer, wherein the tie layer includes a crystalline block composite (CBC) component including an ethylene polymer (EP) comprising at least 90 mol % polymerized ethylene by weight of the ethylene polymer, an alpha-olefin-based crystalline polymer (CAOP), and a block copolymer including an ethylene polymer block comprising at least 90 mol % polymerized ethylene by weight of the ethylene polymer block and a crystalline alpha-olefin block (CAOB), functionalized polyethylene having a melt flow rate (MFR) (190 °C/ 2.16 kg) of 1.0 to 10.0 dg/min, wherein the functionalized polyethylene comprises polyethylene grafted with ethylenically unsubstituted dicarboxylic acid or derivative thereof, and a modifier comprising a polyolefin elastomer.

According to one or more embodiments of the present disclosure, an article may be produced from the above coated substrates.

According to one or more embodiments of the present disclosure, a tie layer a crystalline block composite (CBC) component including an ethylene polymer (EP) comprising at least 90 mol % polymerized ethylene by weight of the ethylene polymer, an alpha-olefin-based crystalline polymer (CAOP), and a block copolymer including an ethylene polymer block comprising at least 90 mol % polymerized ethylene by weight of the ethylene polymer block and a crystalline alpha-olefin block (CAOB), functionalized polyethylene having an MFR (190 °C/ 2.16 kg) of 1.0 to 10.0 dg/min, wherein the functionalized polyethylene comprises polyethylene grafted with ethylenically unsubstituted dicarboxylic acid or derivative thereof, and a modifier comprising a polyolefin elastomer.

Additional features and advantages will be set forth in the detailed description that follows and, in part, will be readily apparent to those skilled in the art from that description or recognized by practicing the embodiments described herein, including the detailed description which follows in addition to the claims.

It is to be understood that both the foregoing general description and the following detailed description describe various embodiments and are intended to provide an overview or framework for understanding the nature and character of the claimed subject matter.

### DETAILED DESCRIPTION

### DEFINITIONS

As used in this disclosure, the term "polymer" may refer to a polymeric compound prepared by polymerizing monomers, whether of the same or a different type. The generic term polymer thus embraces the term "homopolymer," usually employed to refer to polymers prepared from only one type of monomer as well as "copolymer," which refers to polymers prepared from two or more different monomers. The term "interpolymer," as used herein, refers to a polymer prepared by the polymerization of at least two different types of monomers. The generic term interpolymer thus includes copolymers, and polymers prepared from more than two different types of monomers, such as terpolymers.

"Blend", "polymer blend" and like terms mean a composition of two or more polymers. Such a blend may or may not be miscible. Such a blend may or may not be phase separated. Such a blend may or may not contain one or more domain configurations, as determined from transmission electron spectroscopy, light scattering, x-ray scattering, and any other method known in the art. Blends are not laminates, but one or more layers of a laminate may contain a blend. Such blends can be prepared as dry blends, formed *in situ* (e.g., in a reactor), melt blends, or using other techniques known to those of skill in the art.

"Polyolefin", "polyolefin polymer", "polyolefin resin" and like terms mean a polymer produced from a simple olefin (also called an alkene with the general formula CₙH₂ₙ) as a monomer. Polyethylene is produced by polymerizing ethylene with or without one or more comonomers, polypropylene by polymerizing propylene with or without one or more comonomers, etc. Thus, polyolefins include interpolymers such as ethylene/α-olefin copolymers, propylene/α-olefin copolymers, etc.

As used in this disclosure, the term "polyethylene" or "ethylene-based polymer" may refer to polymers comprising greater than 50% by mole of units, which have been derived from ethylene monomer. This includes polyethylene homopolymers or copolymers (meaning units derived from two or more comonomers). Common forms of ethylene-based polymer known in the art include Low Density Polyethylene (LDPE); Linear Low Density Polyethylene (LLDPE); Ultra Low Density Polyethylene (ULDPE); Very Low Density Polyethylene (VLDPE); single-site catalyzed Linear Low Density Polyethylene, including both linear and substantially linear low density resins (m-LLDPE); Medium Density Polyethylene (MDPE); and High Density Polyethylene (HDPE).

As used in this disclosure, the term "polypropylene" or "polypropylene-based polymer" may refer to polymers comprising greater than 50% by mole of units, which have been derived from propylene monomer. This includes polypropylene homopolymers or copolymers (meaning units derived from two or more comonomers).

The term "crystalline" refers to a polymer or polymer block that possesses a first order transition or crystalline melting point (Tm) as determined by differential scanning calorimetry (DSC) or equivalent technique. The term may be used interchangeably with the term "semicrystalline".

The term "block copolymer" or "segmented copolymer" refers to a polymer comprising two or more chemically distinct regions or segments (referred to as "blocks") joined in a linear manner, that is, a polymer comprising chemically differentiated units which are joined (covalently bonded) end-to-end with respect to polymerized functionality, rather than in pendent or grafted fashion. The blocks may differ in the amount or type of comonomer incorporated therein, the density, the amount of crystallinity, the type of crystallinity (e.g. polyethylene versus polypropylene), the crystallite size attributable to a polymer of such composition, the type or degree of tacticity (isotactic or syndiotactic), regio-regularity or regio-irregularity, the amount of branching, including long chain branching or hyper-branching, the homogeneity, or any other chemical or physical property. The block copolymers of the present disclosure may be characterized by unique distributions of both polymer polydispersity (PDI or Mw/Mn) and block length distribution, due, in some embodiments, to the effect of a shuttling agent(s) in combination with the catalyst(s).

The term "crystalline block composite" (CBC) (including the term "crystalline block copolymer composite") refers to a composite comprising three parts: a crystalline ethylene based polymer (CEP), a crystalline alpha-olefin based polymer (CAOP), and a block copolymer having a crystalline ethylene block (CEB) and a crystalline alpha-olefin block (CAOB), wherein the CEB of the block copolymer is the same composition as the CEP in the block composite and the CAOB of the block copolymer is the same composition as the CAOP of the block composite. The three parts are present together as one component. Additionally, the compositional split between the amount of CEP and CAOP will be the same as that between the corresponding blocks in the block copolymer. The block copolymers can be linear or branched. More specifically, each of the respective block segments can contain long chain branches, but the block copolymer segment is substantially linear as opposed to containing grafted or branched blocks. When produced in a continuous process, the crystalline block composites desirably possess PDI from 1.7 to 15, from 1.8 to 10, from 1.8 to 5, or from 1.8 to 3.5. Such crystalline block composites are described in, for example, the following filed patent applications: PCT/US11/41189; U.S. Ser. No. 13/165,054; PCT/US11/41191; U.S. Ser. No. 13/165,073; PCT/US11/41194; and U.S. Ser. No. 13/165,096; all filed on 21 Jun. 2011 and incorporated herein by reference with respect to descriptions of the crystalline block composites, processes to make them and methods of analyzing them.

The term or "crystalline alpha-olefin block" "CAOB" refers to highly crystalline blocks of polymerized alpha olefin units in which the monomer is present in an amount greater than 90 mol %, greater than 93 mol percent, greater than 95 mol percent, or greater than 96 mol percent. In other words, the comonomer content in the CAOBs is less than 10 mol percent, less than 7 mol percent, less than 5 mol percent, or less than 4 mol %. CAOBs with propylene crystallinity have corresponding melting points that are 80° C, above 100° C, above 115° C, or above 120° C. In some embodiments, the CAOB comprise all or substantially all propylene units. CEB, on the other hand, refers to blocks of polymerized ethylene units in which the comonomer content is 10 mol % or less, such as between 0 mol % and 10 mol %, between 0 mol % and 7 mol %, or between 0 mol % and 5 mol %. Such CEB have corresponding melting points that are 75° C and above, such as 90° C and above, or 100° C and above.

"Hard" segments refer to highly crystalline blocks of polymerized units in which the monomer is present in an amount greater than 90 mol percent, greater than 93 mol percent, greater than 95 mol percent, or greater than 98 mol percent. In other words, the comonomer content in the hard segments is less than 2 mol percent, less than 5 mol percent, less than 7 mol percent, or less than 10 mol percent. In some embodiments, the hard segments comprise all or substantially all propylene units. "Soft" segments, on the other hand, refer to amorphous, substantially amorphous or elastomeric blocks of polymerized units in which the comonomer content is greater than 10 mol % and less than 90 mol %, greater than 20 mol % and less than 80 mol %, or greater than 33 mol % and less than 75 mol %.

The term "functionalized polyethylene" means a polyethylene incorporating at least one functional group in its polymer structure. Exemplary functional groups may include, for example, ethylenically unsaturated mono- and di-functional carboxylic acids, ethylenically unsaturated mono- and di-functional carboxylic acid anhydrides, salts thereof and esters thereof. Such functional groups can be grafted to an ethylene homopolymer or an ethylene/α-olefin interpolymer, or it may be copolymerized with ethylene and an optional additional comonomer to form an interpolymer of ethylene, the functional comonomer and optionally other comonomer(s).

The term "LLDPE", includes both resins made using the traditional Ziegler-Natta catalyst systems and chromium-based catalyst systems as well as single-site catalysts, including, but not limited to, bis-metallocene catalysts (sometimes referred to as "m-LLDPE"), constrained geometry catalysts (CGC), and molecular catalysts. Resins include linear, substantially linear, or heterogeneous polyethylene copolymers or homopolymers. LLDPEs contain less long chain branching than LDPEs and includes the substantially linear ethylene polymers which are further defined in U.S. Patent 5,272,236, U.S. Patent 5,278,272, and U.S. Patent 5,582,923; the homogeneously branched linear ethylene polymer compositions such as those in U.S. Patent No. 3,645,992; the heterogeneously branched ethylene polymers such as those prepared according to the process disclosed in U.S. Patent No. 4,076,698; and/or blends thereof (such as those disclosed in US 3,914,342). The LLDPEs can be made via gas-phase, solution-phase or slurry polymerization or any combination thereof, using any type of reactor or reactor configuration known in the art.

"Low density polyethylene" or "LDPE" refers polyethylene having a density from about 0.910 to 0.940 g/cm³ produced in radical polymerization reactions under high pressure such that branching occurs and non-linear polyethylene is formed.

"High density polyethylene" or "HDPE" refers to polyethylene having a density from about 0.940 usually to about 0.970 g/cm³.

The term "olefin block copolymer" refers to a copolymerized polymer of ethylene or propylene with α-olefins, wherein the copolymer comprises a plurality of repeating unit blocks or segments that are distinguishable from one another as they differ in at least one of their physical or chemical properties; for example, the content (mole fraction) of the repeating units derived from ethylene (or propylene) and the α-olefins, respectively, a degree of crystallization, a density, or a melting temperature.

### EMBODIMENTS

Reference will now be made in detail to embodiments of multilayer films including a crystalline block composite (CBC) component including an ethylene polymer (EP) comprising at least 90 mol % polymerized ethylene by weight of the ethylene polymer, an alpha-olefin-based crystalline polymer (CAOP), and a block copolymer including an ethylene polymer block comprising at least 90 mol % polymerized ethylene by weight of the ethylene polymer block and a crystalline alpha-olefin block (CAOB), functionalized polyethylene having an MFR (190 °C/ 2.16 kg) of 1.0 to 10.0 dg/min as determined according to ASTM D1238 , wherein the functionalized polyethylene comprises polyethylene grafted with ethylenically unsubstituted dicarboxylic acid or derivative thereof, and a modifier comprising a polyolefin elastomer.

Various compositions are considered suitable for the CBC. In some embodiments, the CBC may include the CBC disclosed and described in United States Patent Nos. 9,511,567 and 10,526,436, the entire contents of which are hereby incorporated by reference.

The CBCs may be prepared by a process comprising contacting an addition polymerizable monomer or mixture of monomers under addition polymerization conditions with a composition including at least one addition polymerization catalyst, a cocatalyst and a chain shuttling agent, said process being characterized by formation of at least some of the growing polymer chains under differentiated process conditions in two or more reactors operating under steady state polymerization conditions or in two or more zones of a reactor operating under plug flow polymerization conditions. In some embodiments, the CBCs include a fraction of block polymer which possesses a most probable distribution of block lengths.

Suitable processes useful in producing the block composites and crystalline block composites may be found, for example, in U.S. Patent Application Publication No. 2008/0269412, published on Oct. 30, 2008, which is herein incorporated by reference in its entirety.

When producing a block polymer having a crystalline ethylene block (CEB) and a crystalline alpha-olefin block (CAOB) in two reactors or zones it is possible to produce the CEB in the first reactor or zone and the CAOB in the second reactor or zone or to produce the CAOB in the first reactor or zone and the CEB in the second reactor or zone. The CEB may be produced in the first reactor or zone with fresh chain shuttling agent added. The presence of increased levels of ethylene in the reactor or zone producing CEB will typically lead to much higher molecular weight in that reactor or zone than in the zone or reactor producing CAOB. The fresh chain shuttling agent will reduce the MW of polymer in the reactor or zone producing CEB thus leading to better overall balance between the length of the CEB and CAOB segments.

When operating reactors or zones in series it is necessary to maintain diverse reaction conditions such that one reactor produces CEB and the other reactor produces CAOB. Carryover of ethylene from the first reactor to the second reactor (in series) or from the second reactor back to the first reactor through a solvent and monomer recycle system may be minimized There are many possible unit operations to remove this ethylene, but because ethylene is more volatile than higher alpha olefins one simple way is to remove much of the unreacted ethylene through a flash step by reducing the pressure of the effluent of the reactor producing CEB and flashing off the ethylene. Another approach is to avoid additional unit operations and to utilize the much greater reactivity of ethylene versus higher alpha olefins such that the conversion of ethylene across the CEB reactor approaches 100%. The overall conversion of monomers across the reactors can be controlled by maintaining the alpha olefin conversion at a high level (90 to 95%).

Suitable catalysts and catalyst precursors for use in preparing CBCs include metal complexes such as disclosed in WO2005/090426, which is herein incorporated by reference in its entirety. Suitable catalysts are also disclosed in US 2006/0199930; US 2007/0167578; US 2008/0311812; U.S. Pat. No. 7,355,089 B2; or WO 2009/012215, which are herein incorporated by reference in their entirety.

The CBCs may include propylene, 1-butene or 4-methyl-1-pentene and one or more comonomers. The block polymers of the CBCs may include, in polymerized form, propylene and ethylene and/or one or more C₄₋₂₀ α-olefin comonomers, and/or one or more additional copolymerizable comonomers or the block polymers may include 4-methyl-1-pentene and ethylene and/or one or more C₄₋₂₀ α-olefin comonomers, or the block copolymers may include 1-butene and ethylene, propylene and/or one or more C₅-C₂₀ α-olefin comonomers and/or one or more additional copolymerizable comonomers. Additional suitable comonomers may be selected from diolefins, cyclic olefins, and cyclic diolefins, halogenated vinyl compounds, and vinylidene aromatic compounds.

Comonomer content in the resulting CBCs may be measured using any suitable technique, including techniques based on nuclear magnetic resonance (NMR) spectroscopy. Some or all of the polymer blocks may include amorphous or relatively amorphous polymers such as copolymers of propylene, 1-butene or 4-methyl-1-pentene and a comonomer, especially random copolymers of propylene, 1-butene or 4-methyl-1-pentene with ethylene, and any remaining polymer blocks (hard segments), if any, predominantly comprise propylene, 1-butene or 4-methyl-1-pentene in polymerized form. Such segments may be highly crystalline or stereospecific polypropylene, polybutene or poly-4-methyl-1-pentene, especially isotactic homopolymers.

The block copolymers of the CBCs may include from 10 to 90 weight percent crystalline or relatively hard segments and 90 to 10 weight percent amorphous or relatively amorphous segments (soft segments), such as from 20 to 80 weight percent crystalline or relatively hard segments and 80 to 20 weight percent amorphous or relatively amorphous segments (soft segments), or from 30 to 70 weight percent crystalline or relatively hard segments and 70 to 30 weight percent amorphous or relatively amorphous segments (soft segments). Within the soft segments, the mole percent comonomer may range from 10 to 90 mole percent, from 20 to 80 mole percent, or from 33 to 75 mol % percent. In the case wherein the comonomer is ethylene, the ethylene may be present in an amount of 10 mol % to 90 mol %, such as from 20 mol % to 80 mol %, or from 33 mol % to 75 mol % percent. The copolymers may include hard segments that are 90 mol % to 100 mol % propylene. The hard segments may be greater than 90 mol %, greater than 93 mol %, greater than 95 mol % propylene, or greater than 98 mol % propylene. Such hard segments have corresponding melting points that are 80° C, and above, 100° C and above, 115° C and above, or 120° and above.

The CBCs may have a Tm greater than 100° C, such as greater than 120° C, or greater than 125° C. The MFR (230 °C/ 2.16 kg) of the crystalline block composite may be from 0.1 to 1000 dg/min, such as from 0.1 to 50 dg/min, from 5.0 to 50.0 dg/min, from 5.0 to 40.0 dg/min, from 5.0 to 30.0 dg/min, from 5.0 to 20.0 dg/min, or from 5.0 to 10.0 dg/min, as determined according to ASTM D1238. Without being bound by theory, it is believed that using CBCs with a Tm greater than 100 °C may improve adhesion performance and improved delamination resistance of the tie layers at high temperature (i.e., temperatures of at least 100 °C).

The block composite polymers may include ethylene, propylene, 1-butene or 4-methyl-1-pentene and optionally one or more comonomers in polymerized form. The block copolymers of the crystalline block composites may include, in polymerized form, ethylene, propylene, 1-butene, or 4-methyl-1-pentene and optionally one or more C₄₋₂₀ α-olefin comonomers. Additional suitable comonomers may be selected from diolefins, cyclic olefins, and cyclic diolefins, halogenated vinyl compounds, and vinylidene aromatic compounds.

Comonomer content in the resulting block composite polymers may be measured using any suitable technique, such as techniques based on nuclear magnetic resonance (NMR). Appropriate NMR techniques include those described in U.S. Patent Application Publication Nos US2011-0082257, US2011-0082258 and US2011-0082249, all published on April 7, 2011 the entireties of which are hereby incorporated by reference.

The crystalline block composite polymers may include from 0.5 to 95 wt % CEP, from 0.5 to 95 wt % CAOP and from 5 to 99 wt % block copolymer. The crystalline block composite polymers may include from 0.5 to 79 wt % CEP, from 0.5 to 79 wt % CAOP and from 20 to 99 wt % block copolymer, or from 0.5 to 49 wt % CEP, from 0.5 to 49 wt % CAOP and from 50 to 99 wt % block copolymer. Weight percents are based on total weight of crystalline block composite. The sum of the weight percents of CEP, CAOP, and block copolymer equals 100%.

The block copolymers of the CBC may include from 5 to 95 weight percent crystalline ethylene blocks (CEB) and 95 to 5 wt percent crystalline alpha-olefin blocks (CAOB). The block copolymers may include 10 wt % to 90 wt % CEB and 90 wt % to 10 wt % CAOB. The block copolymers may include 25 to 75 wt % CEB and 75 to 25 wt % CAOB, such as 30 to 70 wt % CEB and 70 to 30 wt % CAOB.

In some embodiments, the block composites of the invention have a Crystalline Block Composite Index (CBCI), may be greater than zero but less than 0.4 or from 0.1 to 0.3. In other embodiments, CBCI may be greater than 0.4 and up to 1.0. In some embodiments, the CBCI may be from 0.1 to 0.9, from 0.1 to 0.8, from 0.1 to 0.7 or from 0.1 to 0.6. Additionally, the CBCI may be from 0.4 to 0.7, from 0.5 to 0.7, or from 0.6 to 0.9. In some embodiments, CBCI may be from 0.3 to 0.9, from 0.3 to 0.8, or from 0.3 to 0.7, from 0.3 to 0.6, from 0.3 to 0.5, or from 0.3 to 0.4. In other embodiments, CBCI may be from 0.4 to 1.0, from 0.5 to 1.0, or from 0.6 to 1.0, from 0.7 to 1.0, from 0.8 to 1.0, or from 0.9 to 1.0. CBCI may be determined as described in U.S. Patent No 9,511,567 the entirety of which is hereby incorporated by reference.

The crystalline block composites may have a weight average molecular weight (Mw) of 1,000 to 2,500,000, 35000 to 1,000,000, 50,000 to 500,000, 50,000 to 300,000, or 50,000 to 200,000 g/mol. Appropriate techniques for determining Mw may include Gel Permeation Chromatography (GPC) techniques as described in U.S. Patent Application Publication Nos US2011-0082257, US2011-0082258 and US2011-0082249, all published on April 7, 2011 the entireties of which are hereby incorporated by reference.

The CBC resin(s) may have a CAOB amount of from 30 to 70 weight %, such as at least 40 wt %, at least 45 wt %, at least 50 wt %, and up to 60 wt %, such as up to 55 wt %. In some embodiments, the CBC resin(s) may have a (crystalline) block composite index of at least 0.1, such as at least 0.3, at least 0.5, or at least 0.7. The CBC resin(s) may have an MFR (230 °C/ 2.16 kg) in the range of from 1 to 50 dg/min, such as at least 2, at least 3, up to 40, such as to 30 g/min.

The CBCs may have heat of fusion values (reflecting the relatively higher ethylene content in the CEP and CEB) as measured by differential scanning calorimetry (DSC) of at least 85 Joules per gram (J/g), such as at least 90 J/g. The heat of fusion values for polymers of these types would generally have a maximum in the area of 125 J/g. DSC may be determined as described in U.S. Patent Application Publication Nos US2011-0082257, US2011-0082258 and US2011-0082249, all published on April 7, 2011 the entireties of which are hereby incorporated by reference.

The CBC may have a density of from 0.870 to 0.925 g/cm³, such as from 0.880 to 0.925 g/cm³, from 0.885 to 0.925 g/cm³, from 0.890 to 0.925 g/cm³, from 0.895 to 0.925 g/cm³, from 0.900 to 0.925 g/cm³, from 0.870 to 0.920 g/cm³, such as from 0.880 to 0.920 g/cm³, from 0.885 to 0.920 g/cm³, from 0.890 to 0.920 g/cm³, from 0.895 to 0.920 g/cm³, from 0.900 to 0.920 g/cm³, from 0.870 to 0.915 g/cm³, such as from 0.880 to 0.915 g/cm³, from 0.885 to 0.915 g/cm³, from 0.890 to 0.915 g/cm³, from 0.895 to 0.915 g/cm³, from 0.900 to 0.915 g/cm³, from 0.870 to 0.910 g/cm³, such as from 0.880 to 0.910 g/cm³, from 0.885 to 0.910 g/cm³, from 0.890 to 0.910 g/cm³, from 0.895 to 0.910 g/cm³, from 0.900 to 0.910 g/cm³.

In one or more embodiments, the tie layer may include from 40 weight percent (wt.%) to 90 wt.% CBC. In one or more embodiments, the tie layer may include at least 50 wt.% CBC. In some embodiments, the tie layer may comprises from 40 to 90 wt.%, from 45 to 90 wt.%, from 50 to 90 wt.%, from 55 to 90 wt.%, from 60 to 90 wt.%, from 65 to 90 wt.%, from 40 to 85 wt.%, from 45 to 85 wt.%, from 50 to 85 wt.%, from 55 to 85 wt.%, from 60 to 85 wt.%, from 65 to 85 wt.%, from 40 to 80 wt.%, from 45 to 80 wt.%, from 50 to 80 wt.%, from 55 to 80 wt.%, from 60 to 80 wt.%, from 65 to 80 wt.%, from 40 to 75 wt.%, from 45 to 75 wt.%, from 50 to 75 wt.%, from 55 to 75 wt.%, from 60 to 75 wt.%, from 65 to 75 wt.%, from 40 to 70 wt.%, from 45 to 70 wt.%, from 50 to 70 wt.%, from 55 to 70 wt.%, from 60 to 70 wt.%, or from 65 to 70 wt.% CBC.

Various compositions are considered suitable for the functionalized polyethylene. The functionalized polyethylene may be a polyethylene grafted with ethylenically unsubstituted dicarboxylic acid or derivative thereof. The ethylenically unsubstituted dicarboxylic acid or derivative thereof may be selected from maleic anhydride, itaconic anhydride, maleic acid diesters, fumaric diesters, maleic acid monoesters or fumaric acid monoesters, esters of C₁ to C₄ alcohols, maleic acid, itaconic acid, fumaric acid, or mixtures thereof. In some embodiments, the functionalized polyethylene may be a functionalized linear low density polyethylene. For example, the functionalized polyethylene may include maleic anhydride grafted linear low density polyethylene.

The functionalized polyethylene may have an MFR (190 °C/ 2.16 kg) of from 1.0 to 10.0 dg/min. In embodiments, the functionalized polyethylene may have a melt flow rate (190 °C/ 2.16 kg) of from 1.0 to 10.0 dg/min, from 1.0 to 8.0 dg/min, from 1.0 to 5.0 dg/min, 1.5 to 10.0 dg/min, from 1.5 to 8.0 dg/min, from 1.5 to 5.0 dg/min, from 2.0 to 10.0 dg/min, from 2.0 to 8.0 dg/min, from 2.0 to 5.0 dg/min, from 2.5 to 10.0 dg/min, from 2.5 to 8.0 dg/min, or from 2.5 to 5.0 dg/min. In further embodiments, the functionalized polyethylene may have a density from 0.860 to 0.940 g/cm³, from 0.860 to 0.935 g/cm³, from 0.860 to 0.930 g/cm³, from 0.860 to 0.925 g/cm³, and from 0.860 to 0.924 g/cm³.

In some embodiments, the functionalized polyethylene may be grafted with 0.1 to 3.0 wt.%, such as from 0.1 to 3.0 wt.%, from 0.5 to 3.0 wt.%, from 0.8 to 3.0 wt.%, from 0.1 to 2.5 wt.%, from 0.5 to 2.5 wt.%, 0.8 to 2.5 wt.%, from 0.1 to 2.0 wt.%, from 0.5 to 2.0 wt.%, from 0.8 to 2.0 wt.%, from 0.1 to 1.8 wt.%, from 0.5 to 1.8 wt.%, or from 0.8 to 1.8 wt.% ethylenically unsubstituted dicarboxylic acid or derivative thereof, for example, maleic anhydride.

In one or more embodiments, the tie layer may include from 5 wt.% to 30 wt.% functionalized polyethylene. In one or more embodiments, the tie layer include from 5 wt.% to 30 wt.%, from 8 wt.% to 30 wt.%, from 10 wt.% to 30 wt.%, from 12 wt.% to 30 wt.%, from 5 wt.% to 25 wt.%, from 8 wt.% to 25 wt.%, from 10 wt.% to 25 wt.%, from 12 wt.% to 25 wt.%, from 5 wt.% to 20 wt.%, from 8 wt.% to 20 wt.%, from 10 wt.% to 20 wt.%, or from 12 wt.% to 20 wt. % functionalized polyethylene.

Various compositions are considered suitable for the modifier comprising a polyolefin elastomer. In one or more embodiments, the polyolefin elastomer may be a homogeneously branched ethylene/alpha-olefin copolymer. These copolymers can be made with a single-site catalyst, including but not limited to metallocene catalyst or constrained geometry catalyst. The alpha-olefin is may be a C₃₋₂₀ linear, branched or cyclic alpha -olefin. Examples of C₃₋₂₀ alpha-olefins include propene, 1 butene, 4-methyl-1-pentene, 1-hexene, 1 octene, 1-decene, 1-dodecene, 1 tetradecene, 1 hexadecene, and 1-octadecene. The alpha olefins may also contain a cyclic structure such as cyclohexane or cyclopentane, resulting in an alpha -olefin such as 3 cyclohexyl-1-propene (allyl cyclohexane) and vinyl cyclohexane. Although not alpha olefins in the classical sense of the term, certain cyclic olefins, such as norbornene and related olefins, are alpha -olefins and can be used in place of some or all of the alpha olefins described above. Similarly, styrene and its related olefins (for example, alpha methylstyrene, etc.) may be considered alpha-olefins. Illustrative homogeneously branched ethylene/alpha-olefin copolymers may include ethylene/propylene, ethylene/butene, ethylene/1 hexene, ethylene/1 octene, ethylene/styrene, and the like. Illustrative terpolymers may include ethylene/propylene/1-octene, ethylene/propylene/butene, ethylene/butene/1 octene, and ethylene/butene/styrene.

In one or more embodiments, the polyolefin elastomer may include an olefin block copolymer. The olefin block copolymer may have a melting temperature of at least 115 °C, at least 116 °C, at least 117 °C, or at least 118 °C. Without being bound by theory, it is believed that using olefin block copolymers with a melting temperature of greater than 115 °C may improve adhesion performance and improved delamination resistance of the tie layer at high temperature (i.e. temperatures of at least 100 °C). The olefin block copolymer may have a density of from 0.860 to 0.900 g/cm³, such as from 0.860 to 0.900 g/cm³, from 0.860 to 0.895 g/cm³, from 0.860 to 0.890 g/cm³, from 0.860 to 0.885 g/cm³, from 0.860 to 0.880 g/cm³, 0.865 to 0.900 g/cm³, such as from 0.865 to 0.900 g/cm³, from 0.865 to 0.895 g/cm³, from 0.865 to 0.890 g/cm³, from 0.865 to 0.885 g/cm³, or from 0.865 to 0.880 g/cm³.

In one or more embodiments, the tie layer may include from 5 wt.% to 30 wt.% modifier. In one or more embodiments, the tie layer include from 5 wt.% to 30 wt.%, from 8 wt.% to 30 wt.%, from 10 wt.% to 30 wt.%, from 12 wt.% to 30 wt.%, from 5 wt.% to 25 wt.%, from 8 wt.% to 25 wt.%, from 10 wt.% to 25 wt.%, from 12 wt.% to 25 wt.%.

In one or more embodiments, the tie layer may have an anhydride content of from 0.08 to 0.35 wt.%, such as from 0.08 to 0.35 wt.%, from 0.10 to 0.35 wt.%, from 0.08 to 0.30 wt.%, from 0.10 to 0.30 wt.%, from 0.08 to 0.25 wt.%, or from 0.10 to 0.25 wt.%, based on the total weight of the tie layer.

In various embodiments, the polar layer may include aluminum foil, metallized film, paperboard, polyamide, ethylene vinyl alcohol (EVOH), polyvinyl alcohol (PVOH), thermoplastic starch (TPS), thermoplastic polyurethane (TPU), or combinations thereof.

Without being bound by theory, it is believed that using a crystalline block composite (CBC) component, functionalized polyethylene having an MFR (190 °C/ 2.16 kg) of 1.0 to 10.0 dg/min, wherein the functionalized polyethylene comprises polyethylene grafted with ethylenically unsubstituted dicarboxylic acid or derivative thereof, and a modifier including a polyolefin elastomer may improve adhesion at higher temperatures compared to conventional tie layers. The olefin block copolymer may provide improved adhesion at temperatures greater than or equal to 100 °C, greater than or equal to 105 °C, greater than or equal to 110 °C, greater than or equal to 115 °C, or greater than or equal to 120 °C.

### ADDITIVES

It should be understood that any of the foregoing layers can further comprise one or more additives as known to those of skill in the art such as, for example, antioxidants, ultraviolet light stabilizers, thermal stabilizers, slip agents, antiblock agents, antistatic agents, pigments or colorants, processing aids, crosslinking catalysts, flame retardants, fillers and foaming agents. The layer may contain any amounts of such additives, such as from 0 wt. % to 10 wt. %, from 0 wt. % to 5 wt. %, from 0 wt. % to 1 wt. %, from 0 wt. % to 0.1 wt. %, from 0 wt. % to 0.001 wt. %, or any subset thereof, based on a weight of the layer.

### ARTICLES

The coated substrate may be constructed from two or more layers by any film lamination and/or coextrusion equipment known in the art. The layers may include blown films, cast films, oriented films, solid substrates, or combinations thereof. The oriented films may include oriented polyester (OPET) films, oriented polyamine (OPA), or biaxially oriented polypropylene (BOPP) films. The solid substrates may include metal foil or paperboard. For example, the coated substrate may be prepared using coextrusion techniques, such as, by coextrusion coating or coextrusion lamination techniques.

In one or more embodiments, an article may be produced from the coated substrates described herein. The articles may include multiple steps of extrusion coating, coextrusion coating, coextrusion lamination, and combinations thereof. The articles may include packaging articles, such as retort packaging.

### TEST METHODS

The melting temperature (Tm) of different polymers was measured by differential scanning calorimetry (DSC) with a heat/ cool/ heat method, where the reported Tm was the peak temperature determined from the second heat based on ASTM D3418.

Melt flow rate (MFR) was measured according to ASTM D1238 and/or ISO 1133, under selected conditions of temperature (T) and load (L), noted as MFR(T(°C), L(kg)) and expressed in units of gram per 10 minutes or simplified to dg/min. Conditions used included (190 °C/ 2.16 kg), (230 °C/ 2.16 kg) and (160 °C/ 0.325 kg).

Density measurements were performed by compression molding the pellets according to ASTM D4703. Measurements were made according to ASTM D792 Method B, within one hour of sample pressing.

Peel strength measurements were measured using a Peel Test. First, the tie resin was extrusion-coated on an aluminum sheet via a co-extrusion coating process. The overall structure (1 mil PP - 0.5 mil tie resin) was applied to the aluminum side and has a thickness of 1.5 mil. Masking tape was placed on a portion of the aluminum sheet to generate peel tabs. Since there is weak adhesion between the masking tape and coating, the masking tape can be peeled-off the coating. The sheet to be tested was cut into 25 mm wide strips along the machine direction with the longer side oriented along the machine direction. The coating was peeled off from the aluminum sheet (starting from the location with the masking tape), and then the two jaws of the tensile test machine griped the ends of the peeled-off coating and aluminum sheet. Then the whole sample was slowly pulled at 1 in/min to remove the slack. The sample was then tested at a speed of 25 cm/min and the average load over 75 mm (from 25 mm to 100 mm) was recorded.

### EXAMPLES

The following Examples are offered by way of illustration and are presented in a manner such that one skilled in the art should recognize are not meant to be limiting to the present disclosure as a whole or to the appended claims.

The following compositions were used in the Examples below.

Braskem DS6D21, which is a random copolymer polypropylene commercially available from Braskem, has an MFR (230 °C/ 2.16 kg) of 8.0 dg/min and a melting temperature (Tm) of 142 °C.

Braskem D6D20, which is a random copolymer polypropylene commercially available from Braskem, has an MFR (230 °C/ 2.16 kg) of 1.9 dg/min.

CBC-1, which is a crystalline block copolymer composite, has an MFR (230 °C/ 2.16 kg) of 9.5 dg/min, and a density of 0.905 g/cm³.

FP-1, which is a maleic anhydride grafted polypropylene, has an MFR (160 °C/ 0.325 kg) of 12.5 dg/min, and 1.1 wt% grafted maleic anhydride. FP-1 was prepared according to Example 1 of U.S. Patent No 6228948, the entirety of which is hereby incorporated by reference.

FP-2, which is a maleic anhydride grafted LLDPE, has a density of 0.912 g/cm³, a melt flow rate (190 °C/ 2.16 kg) of 3.0 dg/min, and 1.15 wt% grafted maleic anhydride. FP-2 was prepared according to Example 2 of U.S. Patent No 4950541, the entirety of which is hereby incorporated by reference.

INFUSE^{™} 9500, which is an olefin block copolymer commercially available from The Dow Chemical Company, Midland, MI, has a melt flow rate (190 °C/ 2.16 kg) of 5.0 dg/min, and a density of 0.877 g/cm³.

DOW^{™} LDPE 5004I, which is a low density polyethylene commercially available from The Dow Chemical Company, Midland, MI, has a melt flow rate (190 °C/ 2.16 kg) of 4.2 dg/min, and a density of 0.924 g/cm³.

### EXAMPLE 1

Example tie layers were prepared according to the formulations shown in Table 1. Different formulations of the tie resins were compounded through a 42 mm diameter co-rotating, intermeshing twin-screw extruder. The extruder was configured with 12 barrels (48 L/D). The extruder was equipped with "loss-in-weight feeders." All the raw materials were fed through the main feed port. Nitrogen at 5 SCFH was used to purge first barrel section to maintain an inert atmosphere and minimize oxidation. A six-hole die and four-blades hub were used for underwater pelletization process. Cooling water temp is at 25 °C and water flow rate is at 45 GPM. A run rate of 200 lbs/hr and a screw speed of 250 rpm was used. Barrel 1 was water cooled, Barrels 2-3 were maintained at 50-110 °C, Barrels 4-12 were maintained at 180 °C.

**Table 1: Example Tie Layer Formulations**

| **Ingredient Type** | **SI Units** | **CE1** | **CE2** | **CE3** | **IE1** |
|---|---|---|---|---|---|
| Braskem DS6D21 | wt% | 100 | 42.5 | 60 | |
| Braskem 6D20 | wt% | | 42.5 | | |
| CBC-1 | wt% | | | | 60 |
| FP-1 | wt% | | 15 | | |
| FP-2 | wt% | | | 15 | 15 |
| INFUSE 9500 | wt% | | | 20 | 25 |
| LDPE 5004I | wt% | | | 5 | |
| Total | | 100 | 100 | 100 | 100 |

Extrusion coating trials are performed using a Black-Clawson line following standard coating procedures. In brief, co-extrusion two-layer films are extruded using a the 3-layer extrusion coating (EC) line, using the 2.5 inch (63.5 mm) diameter extruder for random copolymer PP facing the chill roll, and 2.0 inch (50.8 mm) diameter extruder for the tie resin facing the nip roll. The barrel has six heater zones with a temperature profile A1-6 = 160 °C, 210 °C, 235 °C, 255 °C, 285 °C, 290 °C (320 °F, 410 °F, 455 °F, 491 °F, 545 °F, 554 °F). A Nordson EDI 36 inch (914 mm) Autoflex^{™} Die is used, and a 0.5-0.6 mm (0.020") die gap. The line is equipped with a 30 inch (762 mm) chill roll, nip roll, backing roll, and shear slitter.

Co-extruded structure was made with 1 mil of PP (25 microns) and 0.5 mil (12.5 microns) of the tie resin at 554 °F (290 °C), 24-inch (610 mm) die width, 20 mil die gap (0.5 mm), which translates into a coating thickness of 1.5 mils (37.5 microns). The air gap was set at 5.5 inch (154 mm) and samples were collected at 290 ft/min (88 meter/min) with a time-in-the-air-gap (TIAG) around 55 ms. Pre-laminated aluminum foil//PET sheet were dropped onto kraft paper substrate and the coated slip sheets were collected for peel strength testing. The peel strength test was conducted for each sample immediately after production (referred to as "Green Bonding"), after aging for one week at 23 °C (± 2 °C) and 50% (± 10%) relative humidity, and after oven again at 130 to 140 °C for 10 minutes and cooling down to 23 °C. A total of 5 samples were tested for each condition. The results were as shown in Table 2.

**Table 2: Results of the Peel Test**

| **Properties** | **SI Units** | **CE1** | **CE2** | **CE3** | **IE1** |
|---|---|---|---|---|---|
| Tm | °C | 142 | 139 | 141 | 130 |
| MAh% | wt% | N/A | 0.15 | 0.18 | 0.15 |
| Oven aging temp* | °C | 140 | 140 | 140 | 130 |
| Green Bond | N/ 25 mm | 0.17 | 0.17 | N/A** | 0.12 |
| 1-Week Bond | N/ 25 mm | 0.08 | 0.08 | N/A | 0.30 |
| Oven Aged Bond | N/ 25 mm | 0.05 | 0.05 | N/A | 11.85 |

| | | | | | |
|---|---|---|---|---|---|
| *Oven aging: heating at 130- 140 °C for 10 minutes and test adhesion after cooling to room temperature. **Samples not processable during extrusion coating and thereby no adhesion data can be measured. | | | | | |

Example IE1 had adhesion of greater than 10 Newtons per 25 millimeters (N/ 25 mm) after oven heating at 140 °C for 10 minutes, whereas Examples CE1-CE3 had adhesion of less than 1 N/25 mm after oven aging at 140 °C for 10 minutes.

The subject matter of the present disclosure has been described in detail and by reference to specific embodiments. It should be understood that any detailed description of a component or feature of an embodiment does not necessarily imply that the component or feature is essential to the particular embodiment or to any other embodiment. Further, it should be apparent to those skilled in the art that various modifications and variations can be made to the described embodiments without departing from the spirit and scope of the claimed subject matter.

It is noted that one or more of the following claims utilize the term "wherein" as a transitional phrase. For the purposes of defining the present technology, it is noted that this term is introduced in the claims as an open-ended transitional phrase that is used to introduce a recitation of a series of characteristics of the structure and should be interpreted in like manner as the more commonly used open-ended preamble term "comprising."

It should be understood that where a first component is described as "comprising" a second component, it is contemplated that, in embodiments, the first component "consists" or "consists essentially of" that second component. It should further be understood that where a first component is described as "comprising" a second component, it is contemplated that, in embodiments, the first component comprises at least 10%, at least 20%, at least 30%, at least 40%, at least 50%, at least 60%, at least 70%, at least 80%, at least 90%, at least 95%, or even at least 99% that second component (where % can be weight % or molar %).

It is also noted that recitations herein of "at least one" component, element, etc., should not be used to create an inference that the alternative use of the articles "a" or "an" should be limited to a single component, element, etc.

## Claims

1. A coated substrate comprising a polar layer, at least one polypropylene layer, and at least one tie layer that adheres the polypropylene layer to the polar layer, wherein the tie layer comprises:
a crystalline block composite (CBC) component comprising:
i) an ethylene polymer (EP) comprising at least 90 mol % polymerized ethylene by weight of the ethylene polymer;
ii) an alpha-olefin-based crystalline polymer (CAOP) and
iii) a block copolymer comprising
(a) an ethylene polymer block comprising at least 90 mol % polymerized ethylene by weight of the ethylene polymer block and
(b) a crystalline alpha-olefin block (CAOB);
functionalized polyethylene having a melt flow rate (190 °C/ 2.16 kg) of 1.0 to 10.0 dg/min as determined according to ASTM D1238, wherein the functionalized polyethylene comprises polyethylene grafted with ethylenically unsubstituted dicarboxylic acid or derivative thereof; and
a modifier comprising a polyolefin elastomer.

2. The coated substrate of claim 1, wherein the polyolefin elastomer comprises an olefin block copolymer having a density of 0.860 to 0.900 g/cm³, and a melting temperature of at least 115 °C.

3. The coated substrate of claim 1 or 2, wherein the polar layer comprises aluminum foil, metallized film, paperboard, polyamide, EVOH, PVOH, TPS, TPU, or combinations thereof.

4. The coated substrate of any one of claims 1 to 3, wherein the functionalized polyethylene comprises linear low density polyethylene having a density of 0.860 to 0.924 g/cm³ and a melt flow rate (190 °C/ 2.16 kg) of 1.5 to 8.0 dg/min as determined according to ASTM D1238.

5. The coated substrate of any one of claims 1 to 4, wherein the functionalized polyethylene is grafted with 0.1 to 3 wt.% of ethylenically unsubstituted dicarboxylic acid or derivative thereof.

6. The coated substrate of any one of claims 1 to 5, wherein the CBC comprises a density of 0.870 to 0.925 g/cm³, and an MFR (230 °C/ 2.16 kg) of 5.0 to 50.0 dg/min).

7. The coated substrate of any one of claims 1 to 6, wherein the tie layer comprises at least 50 wt.% CBC.

8. The coated substrate of any one of claims 1 to 7, wherein the tie layer comprises:
from 40 to 90 wt.% CBC;
from 5 to 30 wt.% functionalized polyethylene; and
from 5 to 30 wt.% modifier.

9. The coated substrate of any one of claims 1 to 8, wherein the ethylenically unsubstituted dicarboxylic acid or derivative thereof is selected from the group consisting of maleic anhydride, itaconic anhydride, maleic acid diesters, fumaric diesters, maleic acid monoesters or fumaric acid monoesters, esters of C₁ to C₄ alcohols, maleic acid, itaconic acid, fumaric acid, or mixtures thereof.

10. The coated substrate of any one of claims 1 to 9, wherein the ethylenically unsubstituted dicarboxylic acid or derivative thereof comprises maleic anhydride.

11. An article comprising the coated substrate of any one of claims 1 to 10.

12. The article of claim 11, wherein the article comprises retort packaging.

13. The article of claim 11, wherein the article is a co-extruded film, or a laminate.

14. A composition comprising:
a crystalline block composite (CBC) component comprising:
i) an ethylene polymer (EP) comprising at least 90 mol % polymerized ethylene by weight of the ethylene polymer;
ii) an alpha-olefin-based crystalline polymer (CAOP) and
iii) a block copolymer comprising
(a) an ethylene polymer block comprising at least 90 mol % polymerized ethylene by weight of the ethylene polymer block and
(b) a crystalline alpha-olefin block (CAOB);
functionalized polyethylene having a melt flow rate (MFR) (190 °C/ 2.16 kg) of 1.0 to 10.0 dg/min as determined according to ASTM D1238, wherein the functionalized polyethylene comprises polyethylene grafted with ethylenically unsubstituted dicarboxylic acid or derivative thereof; and
a modifier comprising a polyolefin elastomer.
